# EUROPEAN PATENT SPECIFICATION

(11) **EP 2 490 904 B1**
(45) Date of publication and mention of the grant of the patent: **28.01.2015**
(21) Application number: 09850654.6
(22) Date of filing: 19.10.2009
(51) Int. Cl.: B60C 11/13

(54) **TIRE WITH ASYMMETRIC GROOVE BOTTOM FOR SHOULDER GROOVE**
REIFEN MIT ASYMMETRISCHEM RILLENUNTERGRUND FÜR SCHULTERRILLEN
PNEU AVEC FOND DE RAINURE ASYMÉTRIQUE POUR RAINURE D'ÉPAULEMENT

(43) Date of publication of application: 29.08.2012
(73) Proprietor: MICHELIN Recherche et Technique S.A., 1763 Granges-Paccot (CH); Compagnie Générale des Etablissements Michelin, 63000 Clermont-Ferrand (FR)
(72) Inventor: CLAYTON, William, Bennett, Simpsonville SC 29681 (US); NELSON, Susan, Marie, Greenville SC 29605 (US)
(74) Representative: Dossmann, Gérard
(86) International application number: PCT/US2009/061152
(87) International publication number: WO 2011/049551

(56) References cited:
- JP-A- 10 272 906
- US-A- 2 621 698
- US-A- 5 127 455
- US-A- 5 450 885
- US-A1- 2006 011 280
- US-B2- 7 337 816

## Description

### FIELD OF THE INVENTION

The present invention relates to a tire with a shoulder groove that has an asymmetric bottom and, more particularly, to a tire having a shoulder groove that is provided with features at the bottom of the groove that help reduce stress and alleviate cracking from tire operation.

### BACKGROUND OF THE INVENTION

When a tire rolls across a surface, a deformation occurs particularly in the portion at and near the contact with the surface. Conventional understanding is that as the tire continues to roll, this deformation repeats and creates a cyclical field of compressive stress and strain in the tire. Because this cycling can fatigue the material and lead to unwanted cracks, it presents a particular problem that tire designers have approached by focusing on the compressive stress and strain at and near the tire's contact with the road surface.

Certain tire tread patterns have a groove defined in the tread and extending circumferentially around the tire at a position adjacent to the tire's shoulder - i.e., a shoulder groove. Because of its location between the more rigid summit of the tire and the more flexible sidewall portion of the tire, the shoulder groove is frequently a location of increased opportunity for stress concentrations that can lead to longitudinal cracking of the rubber materials used to make the tire. More particularly, as rubber compounds have been shown to crack in mode 1, crack development in the shoulder groove is expected to be dependent upon the Cauchy stress at the bottom of the groove.

Material can be added into the groove to provide reinforcement against cracking along the groove bottom. However, if the addition of such material results in a reduction in the size of the groove, the capacity of the groove to pass water away from the contact surface of the tire during operation in e.g., rainy weather can be unfavorably reduced.

Tires with groove bottoms having particular shapes have been proposed e.g., in Japanese Patent No. 10-272906 A, corresponding with the preamble of claim 1, U.S. Patent Publication No. 2006/0011280 A1 (Yagita), and U.S. Patent No. 5,450,885 A (Hanya).

Therefore, a design for a shoulder groove that helps reduce crackling from cyclical stress and strains would be useful. A design for a shoulder groove that can be readily incorporated into the overall tread pattern of a tire without necessarily changing the overall appearance of the tread pattern would also be useful. These and other advantages will be apparent from the description of the present invention that follows below.

### SUMMARY OF THE INVENTION

Aspects and advantages of the invention will be set forth in part in the following description, or may be obvious from the description, or may be learned through practice of the invention.

In one exemplary embodiment, the present invention provides a tire having a tread and a shoulder, the tire defining circumferential, radial, and axial directions, and the tread defining an inferior tread profile. The tire includes at least one groove formed into a surface of the tread with the groove extending about the circumferential direction of the tire. The groove is positioned adjacent to the shoulder and inward thereof along the axial direction.

The groove includes, as viewed in a meridian plane of the tire, at least four portions. A first linear portion extends radially-inward to a depth D1 from the exterior tread surface. A second linear portion extends radially-inward to a depth D2 from the tread surface, with depth D1 being greater than depth D2. The first linear portion is located between the second linear portion and the shoulder of the tire. A third linear portion is connected to, and extends radially-inward from, an end of the second linear portion. The third linear portion is positioned at an angle θ from a hypothetical line that is collinear with the second linear portion. The angle θ represents the amount by which the third linear portion is angled away from the shoulder. A fourth curvilinear portion forms the radially innermost surface of the at least one groove. The fourth curvilinear portion extends between and connects the first linear portion and the third linear portion. The fourth curvilinear portion includes an arc of an ellipse.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 provides a cross-section view, along the meridian plane, of a tire tread portion having an exemplary embodiment of a shoulder groove of the present invention.
FIG. 2 provides a schematic, cross-sectional view along the meridian plane of an exemplary embodiment of a shoulder groove of the present invention. FIG. 2 includes one or more parameters used in describing aspects of the invention as will be set forth below.
FIG. 3 provides a close-up of the groove bottom of FIG. 2. FIG. 3 also includes one or more parameters used in describing aspects of the present invention as will be set forth below.
FIG. 4 provides an illustration of the arc of an ellipse and parameters that may be used in defining the arc as set forth below.
FIGS. 5 through 8 provide data plots from certain modeling results as will be described below.

### DETAILED DESCRIPTION OF THE INVENTION

The present invention provides a tire with a shoulder groove having an asymmetric bottom and, more particularly, to a tire having a shoulder groove that is provided with features at the bottom of the groove that help reduce stress and alleviate cracking from tire operation. For purposes of describing the invention, reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment, can be used with another embodiment to yield a still further embodiment. Thus, it is intended that the present invention covers such modifications and variations as come within the scope of the appended claims and their equivalents.

"Equatorial Plane" means a plane that passes perpendicular to the tire axis of rotation and bisects the tire structure.

"Meridian Plane" means a plane that passes through and includes the axis of rotation of the tire.

"Inferior Tread Profile" means a line of constant radius that is tangent to at least the groove bottom of the shoulder grooves of the tire.

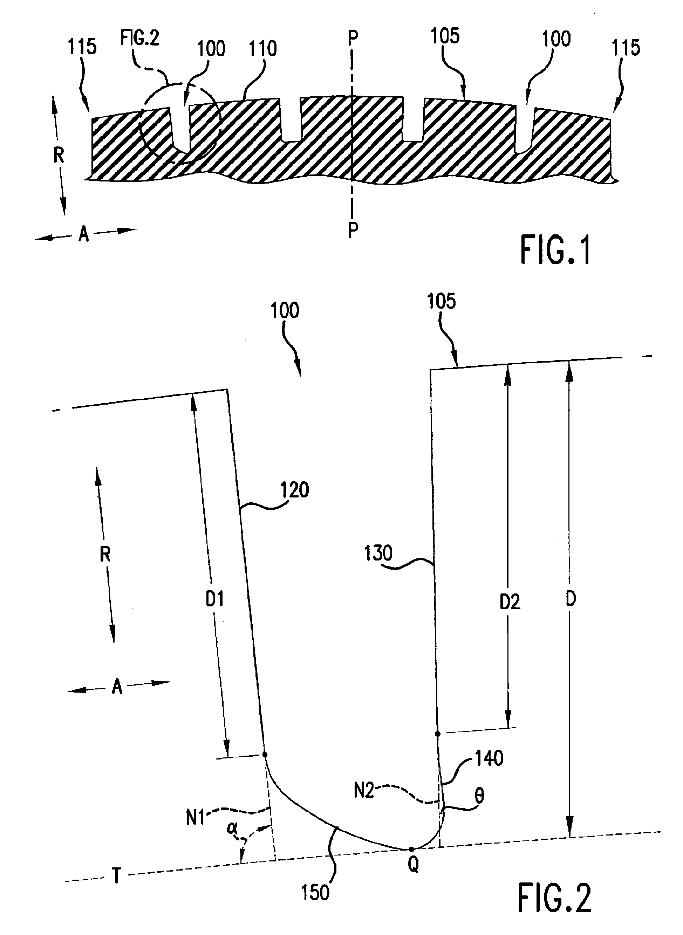

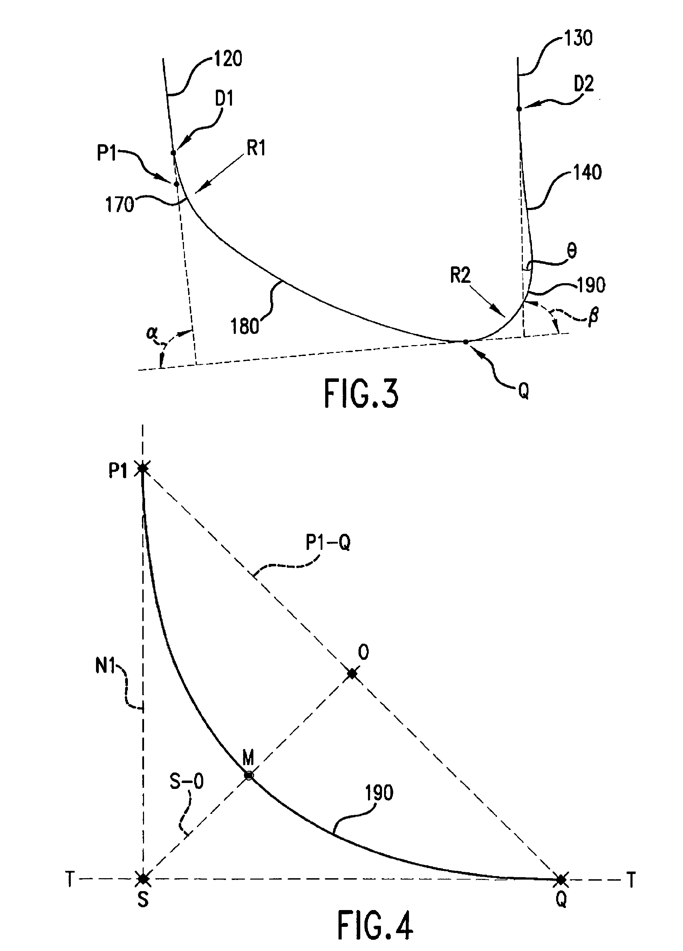

FIGS. 1 and 2 illustrate an exemplary embodiment of a shoulder groove 100 of the present invention. More particularly, tread 110 includes two shoulder grooves 100 where each such groove 100 extends circumferentially around the tire. Each shoulder groove 100 is located adjacent to a shoulder 115 of the tire and inward thereof along the axial direction A. By axially inward, it is meant that on each side of tread 110, each groove 100 is located in a direction moving along the axial direction A towards the central equatorial plane P from a respective shoulder 115. FIGS. 2 and 3 represent one such shoulder groove 100 along one side of tread 105 - it being understood that the pair of shoulders 115 are symmetrical about the equatorial plane P.

For this exemplary embodiment, groove 100 is constructed from four different portions 120, 130, 140, and 150. Each portion provides a wall or surface extending along the circumferential direction of the tread 110. When viewed in the meridian plane as shown in FIGS. 2 and 3, these portions appear as lines and will be so described here with the understanding that such lines represent surfaces along the circumferential direction. For example, a straight line represents a surface that extends around the circumferential direction of the tread.

First linear portion 120 is represented as a straight line that extends radially-inward from the exterior tread surface 105 - i.e., toward the axis of rotation of the tire and generally along radial direction R but not necessarily parallel thereto. Point D1 marks the depth (or length) of first linear portion 120 along the radial direction R. First linear portion 120 is oriented at an angle α to the inferior tread profile T and represents a wall along one side of shoulder groove 100. N1 and N2, shown in phantom and collinear with portions 120 and 130, are virtual or hypothetical lines used in the illustrations for purposes of describing the invention.

Second linear portion 130 also appears in the meridian plane as a straight line that extends radially-inward from the exterior tread surface 105. Point D2 marks the depth of second linear portion 130 along the radial direction R. Second linear portion 130 is oriented at an angle β to the inferior tread profile T and represents another wall along one side of shoulder groove 100. As shown by comparing FIGS. 1 and 2, first linear portion 120 is located between second linear portion 130 and shoulder 115. In addition, the depth D2 of second linear portion 130 is less than the depth D1 of first linear portion.

Depths D1 and D2 can be expressed as percentages of the overall depth D of shoulder groove 100. While other values may be used with the present invention, preferably depth D1 is the range of about 78.5 to about 82.5 percent of depth D and, even more preferably, depth D1 is about 80 percent of depth D. Again, while other values may be used, depth D2 is preferably about 77.5 percent of depth D. Angles α and β are values that are specified by the tire designer depending upon e.g., the intended tire application. Such values for angles α and β can vary along the circumferential direction. As a result, the values for other parameters of the invention can also vary circumferentially provided such values meet the applicable values or ranges specified herein. It should also be understood that surfaces along the groove 100 - such as e.g., first and second linear portions 120 and 130 - can be interrupted along the circumferential direction by various other tread features that might also be used with the tire.

Third linear portion 140 is represented as a straight line that connects to second linear portion 130 at depth D2. Portion 140 extends radially-inward from second linear portion 130. The value of angle θ represents the amount by which third linear portion 140 is angled away from hypothetical line N2 in a direction away from a respective shoulder 115 of the tire and towards the central equatorial plane P. While other values may be used with the present invention, preferably angle θ is in the range of about 0 degrees to about 10 degrees and, even more preferably angle θ is about 5 degrees.

Fourth portion 150 is curvilinear and provides the radially innermost surface of groove 100. Portion 150 extends from first linear portion 120 to third linear portion 140 and connects between these two portions. As shown in the figures, fourth curvilinear portion 150 provides an asymmetric shape for the bottom of groove 100. With reference to FIG. 3, the shape of fourth portion 150 can be described with reference to three different components 170, 180, and 190. The size and positioning of these three sections along with the values for angle θ and depths D1 and D2 relative to the overall groove depth D controls the shape or asymmetry of groove 100.

First circular arc 170 is connected to the first linear portion 120 at its radially innermost end located at depth D1. Having a radius R1, arc 170 is positioned tangent to first linear portion 120 and tangent to an arc of an ellipse 180. Accordingly, first circular arc 170 is bi-tangent to first linear portion 120 and to the arc of an ellipse 180. While other values may be used with the present invention, preferably radius R1 is about 2 mm.

Second circular arc 190 is connected to third linear portion 140 and has a radius R2. Second circular arc 190 is also bi-tangent in that it is positioned tangent to both third linear portion 140 and to the arc of an ellipse 180. While other values may be used with the present invention, preferably radius R2 is in the range of about 1.5 mm to about 2.5 mm and, in certain embodiments, is about 1.5 mm.

The arc of an ellipse 180 connects to both first circular arc 170 and second circular arc 190 and spans between the same. The arc of an ellipse 180 represents the shape of the surface forming the bottom-most portion of shoulder groove 100. The position of the arc of an ellipse 180 is also fixed by its tangency. More particularly, the arc of an ellipse is tangent to the hypothetical line N1 at point P1 and is also tangent to the inferior tread profile T at point Q.

The shape of the arc of an ellipse 180 is determined with reference to a parameter c that will be described using FIG. 4. Parameter c describes the degree of curvature of the arc of an ellipse and is defined using a ratio. First, a hypothetical line P1-Q is constructed from the point of tangency of the ellipse 180 with hypothetical line N1 at point P1 to the point of tangency of the ellipse 180 with the inferior tread profile T at point Q. Next, a hypothetical line S-O is constructed from point S to point O. Point S represents the intersection of line N1 with the inferior tread profile T. Hypothetical line S-O is constructed perpendicular to hypothetical line P1-Q. The intersection of hypothetical line S-O with the ellipse is denoted as point M. Accordingly, parameter c is defined as the ratio of M-O to S-O. While other values may be used with the present invention, preferably parameter c is in the range of about 0.220 to 0.325 and, for certain embodiments, preferably has a value of about 0.225.

In order to evaluate the effectiveness of the asymmetry of shoulder groove 100, tire models were constructed and examined using finite element analysis. More specifically, tires were modeled in a fully loaded condition of 3856 kilograms at 7.2 bar and travelling at 90 km/hour. The tires were modeled to determine the maximum Cauchy stress along fourth curvilinear portion 150 as a tire makes a full rotation about its axis. Contrary to conventional wisdom, it was discovered that the maximum Cauchy stress did not necessarily occur at the bottom of the tire at or near the contact region with the road surface due to compressive Cauchy stresses. Instead, the maximum Cauchy stress sometimes occurred as an unexpected tensile stress at or near the top of the tire during operation. Discovering that the largest Cauchy stress can be a tensile stress at the top of the tire, informed the design of the groove bottom of the present invention.

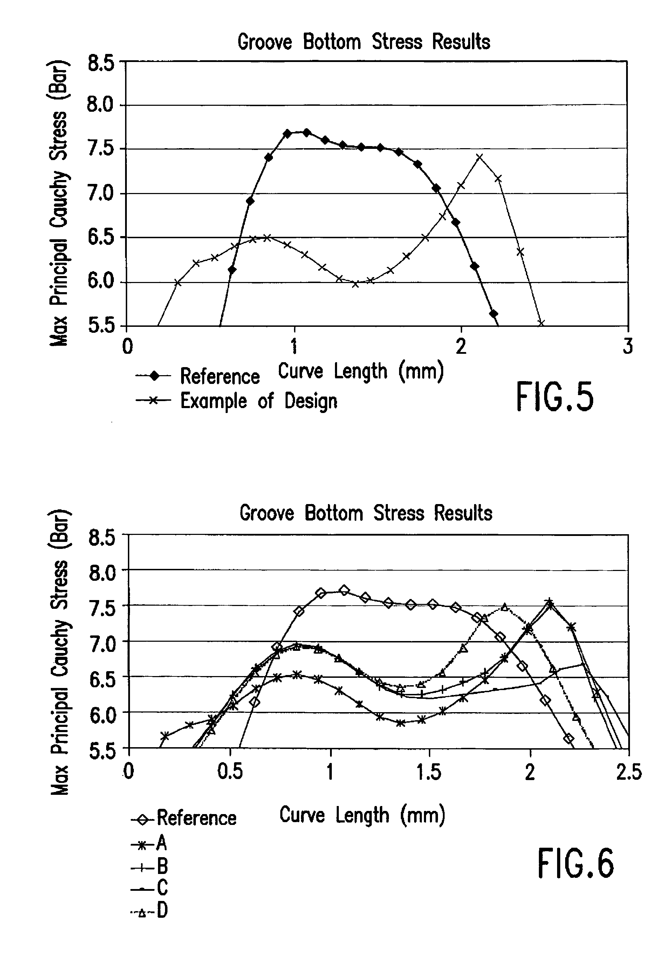

Accordingly, using finite element analysis as discussed above, FIG. 5 represents a plot of the maximum Cauchy stress incurred during a revolution of the tire as function of position along the groove bottom - i.e. along fourth curvilinear portion 150. A position at zero along the x-axis represents the beginning of curvilinear portion 150 at depth D1 with increasing values representing movement towards the end of curvilinear portion 150 at depth D2. The reference values (Ref) represents a plot of the Cauchy stress for a groove bottom that uses a maximum radius of curvature to connect first and second linear portions 120 and 130 between points D1 and D2 (FIG. 3). The Example of Design values represent a plot of Cauchy stress for a shoulder groove 100 where D1 = 0.8, R1 = 2.0 mm, parameter c = 0.225, R2 = 1.5 mm, θ = 5 degrees, and D2 = 0.775. As shown in FIG. 5, this exemplary embodiment of the present invention dramatically reduces the Cauchy stress experienced along the fourth curvilinear portion 150 of shoulder groove 100.

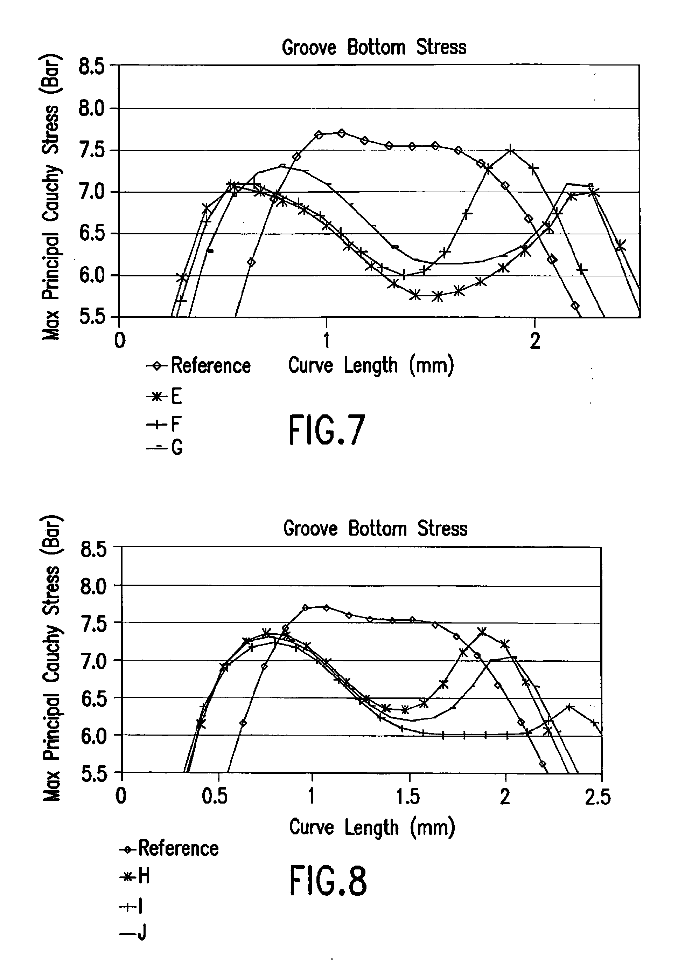

FIGS. 6, 7, and 8 show the results of additional analysis where the parameters D1, C, θ, and R2 were varied while D2 was held constant at 0.775 and R1 was held constant at 2.0 mm. As shown in these plots, the present invention can be used to reduce the Cauchy stress over a range of values as set forth above. Table 1 provides a legend for plots shown in FIGS. 6, 7, and 8.

**TABLE 1**

| **Legend** | **P1** | **C** | **Theta** | **R2** |
|---|---|---|---|---|
| A | 785 | 220 | 10 | 1.5 |
| B | 785 | 325 | 0 | 1.5 |
| C | 785 | 325 | 10 | 1.5 |
| D | 785 | 325 | 10 | 2.5 |
| E | 825 | 220 | 10 | 1.5 |
| F | 825 | 220 | 10 | 2.5 |
| G | 825 | 325 | 0 | 1.5 |
| H | 825 | 325 | 0 | 2.5 |
| I | 825 | 325 | 10 | 1.5 |
| J | 825 | 325 | 10 | 2.5 |

While the present subj ect matter has been described in detail with respect to specific exemplary embodiments and methods thereof, it will be appreciated that those skilled in the art, upon attaining an understanding of the foregoing may readily produce alterations to, variations of, and equivalents to such embodiments. By way of example, first and second linear portions 120 and 130 are each shown in the figures as a single line segment that extends directly from the exterior tread surface 105. However, linear portions 120 and/or 130 could each be constructed from e.g., more than one line segment connected between the exterior tread surface 105 and depths D1 or D2, respectively. Such additional line segment(s) might form a different angle with hypothetical lines N1 and/or N2 while still providing overall for a first or second linear portion 120 and/or 130 that extends - albeit by more than one line segment - from the exterior tread surface 105. In addition, portions 120 and 130 could also be provided in other configurations such as curvilinear as well. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

## Claims

1. A tire having a tread (110) and a shoulder (115), the tire defining circumferential, radial (R), and axial (A) directions, the tread defining an inferior tread profile, the tire comprising:
at least one groove (100) formed into a surface of the tread (110), said groove (100) extending about the circumferential direction of the tire;
said groove positioned adjacent to the shoulder (115) and inward thereof along the axial (A) direction;
said groove (100) comprising, as viewed in a meridian plane of the tire, at least the following portions:
a first linear portion (120) extending radially-inward to a depth D1 from the exterior tread surface (105);
a second linear portion (130) extending radially-inward to a depth D2 from the tread surface, wherein the first linear portion(120) is located between the second linear portion (130) and the shoulder (115) of the tire;
a third linear portion (140) connected to, and extending radially-inward from, an end of the second linear portion (130), the third linear portion (140) being positioned at an angle θ from a hypothetical line (N2) that is collinear with the second linear portion (130), wherein angle θ represents the amount by which the third linear portion (130) is angled away from the shoulder (115); said groove (100) is **characterized in that**: the depth D1 is greater than depth D2, and said groove (100) further comprises
a fourth curvilinear (150) portion forming the radially innermost surface of the at
least one groove (100), the fourth curvilinear portion (150) extending between and connecting the first linear portion (120) and the third linear portion (140), the fourth curvilinear portion (150) comprising an arc of an ellipse.

2. A tire as in claim 1, wherein the fourth curvilinear portion (150) further forms a first circular arc (170) of radius R1 that is connected to the first linear portion (120) at a radially-innermost end of the first linear portion (120), wherein the first circular arc (170) is positioned tangent to the first linear portion (120).

3. A tire as in claim 2, wherein the fourth curvilinear portion (150) further forms a second circular arc (190) of radius R2 that is connected to the third linear portion (140) at a radially-innermost end of the third linear portion (130), and wherein the second circular arc (190) is positioned tangent to the third linear portion (140).

4. A tire as in claim 3, the tire defining an inferior tread profile, wherein the arc of an ellipse of the fourth curvilinear portion (150) further connects the first circular arc (170) and the second circular arc (190), wherein the arc of an ellipse is tangent to the first circular arc (170) and tangent to the inferior tread profile (T).

5. A tire as in claim 4, wherein said groove has an overall depth of D, and wherein the depth D1 is in the range of about 78.5 to about 82.5 percent of depth D.

6. A tire as in claim 4, wherein the radius R1 is about 2 mm.

7. A tire as in claim 4, wherein the angle 9 is in the range of about 0 degrees to about 10 degrees.

8. A tire as in claim 4, wherein said groove has an overall depth of D, and wherein the depth D1 is in the range of about 78.5 to about 82.5 percent of the depth D, and wherein the depth D2 is about 77.5 percent of the depth D.

9. A tire as in claim 4, wherein the ellipse has a parameter c value in the range of about 0.220 to about 0.325.

10. A tire as in claim 4, wherein said groove has an overall depth of depth D, and wherein the depth D2 is about 77.5 percent of the depth D.

11. A tire as in claim 4, wherein said groove has an overall depth of D, and wherein the depth D1 is in the range of about 78.5 to about 82.5 percent of the depth D.

12. A tire as in claim 11, wherein said groove has an overall depth of D, and wherein the depth D2 is about 77.5 percent of the depth D.

13. A tire as in claim 1, wherein the ellipse has a parameter c value in the range of about 0.220 to about 0.325.

14. A tire as in claim 1, wherein as viewed in a meridian plane of the tire, the first linear portion (120) is constructed as a single, straight-line segment that extends from the exterior tread surface (105) to the depth D1.

15. A tire as in claim 14, wherein as viewed in a meridian plane of the tire, the second linear portion (130) is constructed as a single, straight-line segment that extends from the exterior tread surface (105) to the depth D2.

## Patentansprüche

1. Reifen, der eine Lauffläche (110) und eine Schulter (115) hat, wobei der Reifen eine Umfangs-, eine Radial- (R) und eine Axialrichtung (A) definiert, wobei die Lauffläche ein untergeordnetes Laufflächenprofil definiert, wobei der Reifen Folgendes umfasst:
wenigstens eine Rille (100), die in eine Oberfläche der Lauffläche (110) geformt ist, wobei sich die Rolle (100) um die Umfangsrichtung des Reifens erstreckt,
wobei die Rille angrenzend an die Schulter (115) und von derselben nach innen entlang der Axialrichtung (A) angeordnet ist,
wobei die Rille (100), gesehen in einer Meridianebene des Reifens, wenigstens die folgenden Abschnitte umfasst:
einen ersten linearen Abschnitt (120), der sich bis zu einer Tiefe D1 von der Laufflächen-Außenfläche (105) in Radialrichtung nach innen erstreckt,
einen zweiten linearen Abschnitt (130), der sich bis zu einer Tiefe D2 von der Laufflächen-Oberfläche in Radialrichtung nach innen erstreckt, wobei der erste lineare Abschnitt (120) zwischen dem zweiten linearen Abschnitt (130) und der Schulter (115) des Reifens angeordnet ist,
einen dritten linearen Abschnitt (140), der mit einem Ende des zweiten linearen Abschnitts (130) verbunden ist und sich von demselben aus in Radialrichtung nach innen erstreckt, wobei der in einem Winkel θ von eine hypothetischen Linie (N2) angeordnet ist, die kollinear mit dem zweiten linearen Abschnitt (130) ist, wobei der Winkel θ das Ausmaß darstellt, um das der dritte lineare Abschnitt (140) von der Schulter (115) weg abgewinkelt ist,
wobei die Rille (100) **dadurch gekennzeichnet ist, dass**:
die Tiefe D1 größer ist als die Tiefe D2, und die Rille (100) ferner einen vierten krummlinigen Abschnitt (150) umfasst, der die in Radialrichtung innerste Fläche der wenigstens einen Rille (100) bildet, wobei sich der vierte krummlinige Abschnitt (150) zwischen dem ersten linearen Abschnitt (120) und dem dritten linearen Abschnitt (140) erstreckt und dieselben verbindet, wobei der vierte krummlinige Abschnitt (150) einen Bogen einer Ellipse umfasst.

2. Reifen nach Anspruch 1, wobei der vierte krummlinige Abschnitt (150) ferner einen ersten Kreisbogen (170) mit einem Radius R1 bildet, der an einem in Radialrichtung innersten Ende des ersten linearen Abschnitts (120) mit dem ersten linearen Abschnitt (120) verbunden ist, wobei der erste Kreisbogen (170) tangential zu dem ersten linearen Abschnitt (120) angeordnet ist.

3. Reifen nach Anspruch 2, wobei der vierte krummlinige Abschnitt (150) ferner einen zweiten Kreisbogen (190) mit einem Radius R2 bildet, der an einem in Radialrichtung innersten Ende des dritten linearen Abschnitts (140) mit dem dritten linearen Abschnitt (140) verbunden ist, und wobei der zweite Kreisbogen (190) tangential zu dem dritten linearen Abschnitt (140) angeordnet ist.

4. Reifen nach Anspruch 3, wobei der Reifen ein untergeordnetes Laufflächenprofil definiert, wobei der Bogen einer Ellipse des vierten krummlinigen Abschnitts (150) ferner den ersten Kreisbogen (170) und den zweiten Kreisbogen (190) verbindet, wobei der Bogen einer Ellipse tangential zu dem ersten Kreisbogen (170) und tangential zu dem untergeordneten Laufflächenprofil (T) ist.

5. Reifen nach Anspruch 4, wobei die Rille eine Gesamttiefe von D hat und wobei die Tiefe D1 in dem Bereich von etwa 78,5 bis etwa 82,5 Prozent der Tiefe D liegt.

6. Reifen nach Anspruch 4, wobei der Radius R1 etwa 2 mm beträgt.

7. Reifen nach Anspruch 4, wobei der Winkel θ in dem Bereich von etwa 0 Grad bis etwa 10 Grad liegt.

8. Reifen nach Anspruch 4, wobei die Rille eine Gesamttiefe von D hat und wobei die Tiefe D1 in dem Bereich von etwa 78,5 bis etwa 82,5 Prozent der Tiefe D liegt und wobei die Tiefe D2 etwa 77,5 Prozent der Tiefe D beträgt.

9. Reifen nach Anspruch 4, wobei die Ellipse einen Wert des Parameters c in dem Bereich von etwa 0,220 bis etwa 0,325 hat.

10. Reifen nach Anspruch 4, wobei die Rille eine Gesamttiefe von D hat und wobei die Tiefe D2 etwa 77,5 Prozent der Tiefe D beträgt.

11. Reifen nach Anspruch 4, wobei die Rille eine Gesamttiefe von D hat und wobei die Tiefe D1 in dem Bereich von etwa 78,5 bis etwa 82,5 Prozent der Tiefe D liegt.

12. Reifen nach Anspruch 11, wobei die Rille eine Gesamttiefe von D hat und wobei die Tiefe D2 etwa 77,5 Prozent der Tiefe D beträgt.

13. Reifen nach Anspruch 1, wobei die Ellipse einen Wert des Parameters c in dem Bereich von etwa 0,220 bis etwa 0,325 hat.

14. Reifen nach Anspruch 1, wobei, gesehen in einer Meridianebene des Reifens, der erste lineare Abschnitt (120) als ein einzelnes, geradliniges Segment aufgebaut ist, das sich von der Laufflächen-Außenfläche (105) aus bis zu der Tiefe D1 erstreckt.

15. Reifen nach Anspruch 14, wobei, gesehen in einer Meridianebene des Reifens, der zweite lineare Abschnitt (130) als ein einzelnes, geradliniges Segment aufgebaut ist, das sich von der Laufflächen-Außenfläche (105) aus bis zu der Tiefe D2 erstreckt.

## Revendications

1. Pneumatique ayant une bande de roulement (110) et un épaulement (115), le pneumatique définissant des directions circonférentielle, radiale (R) et axiale (A), la bande de déroulement définissant un profil inférieur de bande de roulement, le pneumatique comportant :
au moins une gorge (100) formée dans une surface de la bande de roulement (110), ladite gorge (100) s'étendant autour de la direction circonférentielle du pneumatique ;
ladite gorge étant située au voisinage immédiat de l'épaulement (115) et vers l'intérieur de celui-ci dans la direction axiale (A) ;
ladite gorge (100) comprenant, vues dans un plan méridien du pneumatique, au moins les parties suivantes :
une première partie linéaire (120) s'étendant radialement vers l'intérieur jusqu'à une profondeur D1 depuis la surface extérieure (105) de la bande de roulement ;
une deuxième partie linéaire (130) s'étendant radialement vers l'intérieur jusqu'à une profondeur D2 depuis la surface de la bande de roulement, la première partie linéaire (120) étant située entre la deuxième partie linéaire (130) et l'épaulement (115) du pneumatique ;
une troisième partie linéaire (140) reliée à, et s'étendant radialement vers l'intérieur depuis, une extrémité de la deuxième partie linéaire (130), la troisième partie linéaire (140) étant orientée suivant un angle θ par rapport à une ligne hypothétique (N2) colinéaire à la deuxième partie linéaire (130), l'angle θ représentant la mesure dans laquelle la troisième partie linéaire (130) s'écarte obliquement de l'épaulement (115) ;
ladite gorge (100) étant **caractérisée en ce que** la profondeur D1 est plus grande que la profondeur D2, et ladite gorge (100) comprend en outre
une quatrième partie curviligne (150) formant la surface radialement la plus intérieure de la/des gorge(s) (100), la quatrième partie curviligne (150) s'étendant entre et reliant la première partie linéaire (120) et la troisième partie linéaire (140), la quatrième partie curviligne (150) comprenant un arc d'ellipse.

2. Pneumatique selon la revendication 1, dans lequel la quatrième partie curviligne (150) forme en outre un premier arc de cercle (170) de rayon R1 relié à la première partie linéaire (120) en une extrémité radialement la plus intérieure de la première partie linéaire (120), le premier arc de cercle (170) étant en position tangentielle à la première partie linéaire (120).

3. Pneumatique selon la revendication 2, dans lequel la quatrième partie curviligne (150) forme en outre un second arc de cercle (190) de rayon R2 relié à la troisième partie linéaire (140) en une extrémité radialement la plus intérieure de la troisième partie linéaire (140), le second arc de cercle (190) étant en position tangentielle à la troisième partie linéaire (140).

4. Pneumatique selon la revendication 3, le pneumatique définissant un profil inférieur de bande de roulement, dans lequel l'arc d'ellipse de la quatrième partie curviligne (150) relie en outre le premier arc de cercle (170) et le second arc de cercle (190), l'arc d'ellipse étant tangentiel au premier arc de cercle (170) et tangentiel au profil inférieur (T) de la bande de roulement.

5. Pneumatique selon la revendication 4, dans lequel ladite gorge a une profondeur globale D, et dans lequel la profondeur D1 est de l'ordre de 78,5 à 82,5 pour 100 de la profondeur D.

6. Pneumatique selon la revendication 4, dans lequel le rayon R1 est d'environ 2 mm.

7. Pneumatique selon la revendication 4, dans lequel l'angle θ est de l'ordre de 0 degré à 10 degrés.

8. Pneumatique selon la revendication 4, dans lequel ladite gorge a une profondeur globale D, et dans lequel la profondeur D1 est de l'ordre de 78,5 à 82,5 pour 100 de la profondeur D, et dans lequel la profondeur D2 est de l'ordre de 77,5 pour 100 de la profondeur D.

9. Pneumatique selon la revendication 4, dans lequel l'ellipse a une valeur de paramètre c de l'ordre de 0,220 à 0,325.

10. Pneumatique selon la revendication 4, dans lequel ladite gorge a une profondeur globale D et dans lequel la profondeur D2 est de l'ordre de 77,5 pour 100 de la profondeur D.

11. Pneumatique selon la revendication 4, dans lequel ladite gorge a une profondeur globale D et dans lequel la profondeur D1 est de l'ordre de 78,5 à 82,5 pour 100 de la profondeur D.

12. Pneumatique selon la revendication 11, dans lequel ladite gorge a une profondeur globale D et dans lequel la profondeur D2 est de l'ordre de 77,5 pour 100 de la profondeur D.

13. Pneumatique selon la revendication 1, dans lequel l'ellipse a une valeur de paramètre c de l'ordre de 0,220 à 0,325.

14. Pneumatique selon la revendication 1, dans lequel, vue dans un plan méridien du pneumatique, la première partie linéaire (120) est construite sous la forme d'un unique segment de droite qui s'étend jusqu'à la profondeur D1 depuis la surface extérieure (105) du pneumatique.

15. Pneumatique selon la revendication 14, dans lequel, vue dans un plan méridien du pneumatique, la deuxième partie linéaire (130) est construite sous la forme d'un unique segment de droite qui s'étend jusqu'à la profondeur D2 depuis la surface extérieure (105) du pneumatique.
